# EUROPÄISCHE PATENTSCHRIFT

(11) **EP 3 250 334 B1**
(45) Veröffentlichungstag und Bekanntmachung des Hinweises auf die Patenterteilung: **12.12.2018**
(21) Anmeldenummer: 15804324.0
(22) Anmeldetag: 29.10.2015
(51) Int. Cl.: B22D 2/00, G01K 1/02, G01K 11/26, G01S 13/75

(54) **ÜBERWACHUNG EINES METALLURGISCHEN GEFÄSSES EINER METALLINDUSTRIEANLAGE**
METAL INDUSTRY ASSEMBLY AND METHOD FOR INSPECTING A METALLURGICAL CONTAINER
INSTALLATION MÉTALLURGIQUE ET PROCÉDÉ DE CONTRÔLE D'UN RÉCIPIENT MÉTALLURGIQUE

(30) Priorität: 30.01.2015 EP 15153241
(43) Veröffentlichungstag der Anmeldung: 06.12.2017
(73) Patentinhaber: Primetals Technologies Austria GmbH, 4031 Linz (AT)
(72) Erfinder: PROFELT, Franz, A-5723 Uttendorf (AT); ROHRHOFER, Andreas, A-4020 Linz (AT); KUEHAS, Thomas, A-4225 Luftenberg (AT); WEINZINGER, Michael, A-4501 Neuhofen a. d. Krems (AT)
(74) Vertreter: Metals@Linz
(86) Internationale Anmeldenummer: PCT/EP2015/075091
(87) Internationale Veröffentlichungsnummer: WO 2016/119925

(56) Entgegenhaltungen:
- US-A1- 2013 333 473
- FACHBERGER R ET AL: "SAW-RFID and temperature monitoring of slide gate plates", SENSORS, 2009 IEEE, IEEE, PISCATAWAY, NJ, USA, 25. Oktober 2009 (2009-10-25), Seiten 1514-1517, XP031618875, ISBN: 978-1-4244-4548-6
- FACHBERGER R ET AL: "Monitoring of the temperature inside a lining of a metallurgical vessel using a SAW temperature sensor", PROCEDIA CHEMISTRY, ELSEVIER, AMSTERDAM, NL, Bd. 1, Nr. 1, 30. September 2009 (2009-09-30), Seiten 1239-1242, XP026799776, ISSN: 1876-6196 [gefunden am 2009-09-01]

## Beschreibung

Die vorliegende Erfindung geht aus von einem Verfahren zur Überwachung eines metallurgischen Gefäßes in einer Metallindustrieanlage, wobei die Metallindustrieanlage mehrere Verarbeitungsstationen umfasst, welche von dem metallurgischen Gefäß angelaufen und/oder durchlaufen werden,
- wobei das metallurgische Gefäß mit einem Transponder mit Transponderdaten ausgerüstet wird,
- wobei an mindestens einer der Verarbeitungsstationen eine Lesestation angeordnet ist,
- wobei der Transponder, sofern das metallurgische Gefäß sich in einem bezüglich der Lesestation ortsfesten Erfassungsbereich der Lesestation befindet, mit der Lesestation kommuniziert,
- wobei die Kommunikation der Lesestation mit dem Transponder einer Auswertungseinrichtung zugeführt wird,
- wobei der Auswertungseinrichtung weiterhin Prozessdaten zugeführt werden.

Die vorliegende Erfindung geht weiterhin aus von einer Metallindustrieanlage, wobei die Metallindustrieanlage mehrere Verarbeitungsstationen umfasst, welche von einem metallurgischen Gefäß der Metallindustrieanlage angelaufen und/oder durchlaufen werden,
- wobei das metallurgische Gefäß mit einem Transponder mit Transponderdaten ausgerüstet ist,
- wobei an mindestens einer der Verarbeitungsstationen eine Lesestation angeordnet ist,
- wobei der Transponder, sofern das metallurgische Gefäß sich in einem bezüglich der Lesestation ortsfesten Erfassungsbereich der Lesestation befindet, mit der Lesestation kommuniziert,
- wobei die Kommunikation der Lesestation mit dem Transponder einer Auswertungseinrichtung zugeführt wird,
- wobei der Auswertungseinrichtung weiterhin Prozessdaten zugeführt werden.

In metallurgischen Industrieanlagen werden metallurgische Gefäße eingesetzt, um Roheisenschmelzen, Stahlschmelzen, flüssige Schlacken, Schrott und dergleichen zu transportieren. Zum Beispiel sind im Stahlwerk in den verschiedenen Anlagenteilen mehrere Gefäße im Einsatz. Die Anlagenteile können beispielsweise einen Konverter, einen Elektrolichtofenbogen usw. umfassen. Die Anzahl an metallurgischen Gefäßen kann je nach Kapazität des Stahlwerks bei 30 und mehr liegen. Die metallurgischen Gefäße durchlaufen verschiedene Routen zwischen den Anlagenteilen. Die Anlagenbediener und Kranfahrer müssen sicherstellen, dass das richtige Gefäß zum richtigen Zeitpunkt am richtigen Anlagenort abgestellt ist. Sowohl aus dem Gesichtspunkt der Qualität (möglichst geringe Abkühlung des Roheisens/Stahlbades im Gefäß) als auch aus Energiespargründen ist ein möglichst hoher Heißeinsatz von Gefäßen anzustreben. Die Gefäße im Stahlwerk werden z.B. beheizt, bevor Stahl aus dem Elektrolichtbogenofen/Konverter in sie geleert wird. Bestimmte Stahlqualitäten sollten außerdem nicht nacheinander im gleichen Gefäß transportiert werden, da die im metallurgischen Gefäß verbleibenden geringen Restmengen die chemische Zusammensetzung der nachfolgenden Schmelze chemisch beeinflussen können. Dies gilt insbesondere für bestimmte Edelstahlgüten und auch für manche Stahllegierungen.

Aus diesem Grund werden die im Betrieb eingesetzten metallurgischen Gefäße an verschiedenen Positionen durch Transponder erfasst. Bei den Transpondern kann es sich - dies gilt auch für die Ausgestaltungen der vorliegenden Erfindung - um SAW-, RFID- oder andere geeignete Transponder handeln. Die so erfassten Informationen werden an ein gemeinsames Leitsystem weiter vermittelt. Je nach Größe des Werks können diese Erfassungspositionen weit auseinander liegen. Erfassungspositionen bei Pfannen sind beispielsweise der Konverter, die Pfannenöfen, die Umleergrube und die Pfannenfeuer. Bei einem Schlackebehälter sind Erfassungspositionen beispielsweise der Lichtbogenofen oder die Schlackegrube. Bei einem Torpedowagen sind Erfassungspositionen beispielsweise der Hochofen oder die Umleergrube.

Bei den aktuell verwendeten Implementierungen werden lediglich die Daten von den Erfassungspositionen ausgewertet. Eine Validierung der empfangenen Daten ist hiermit jedoch nicht möglich, da es kein weiteres System gibt, welches die empfangenen Daten auf Plausibilität überprüft. Desweiteren ist es auch nicht so einfach möglich, zu erkennen, ob der am metallurgischen Gefäß montierte Transponder noch funktionsfähig ist oder nicht. Wird beispielsweise eine Pfanne mit defektem Transponder an einer Erfassungspositionen vorbeigeführt, kann diese durch das System nicht erkannt werden. Bis der Fehler gefunden wird, entstehen dadurch oftmals erhebliche Nachteile. Beispielsweise ist einem gekoppelten Planungssystem nicht mehr bekannt, wo sich diese Pfanne befindet und wie diese daher zukünftig eingeplant werden kann.

Aus der US 2013/0 333 473 A1 ist bekannt, bei einer Stranggießkokille Temperaturerfassungselemente vorzusehen, welche ihre Daten leitungslos über Transponder an ein zentrales Erfassungssystem übermitteln.

Aus dem Fachaufsatz "SAW-RFID and Temperature Monitoring of Slide Gate Plates" von R. Fachberger und A. Binder, IEEE SENSORS 2009 Conference, Seiten 1514 bis 1517, ist bekannt, am Pfannenschieber einer Gießpfanne Temperaturerfassungselemente vorzusehen, welche ihre Daten leitungslos über Transponder an ein zentrales Erfassungssystem übermitteln.

Aus dem Fachaufsatz "Monitoring of the temperature inside a lining of a metallurgical vessel using a SAW sensor" von R. Fachberger und A. Erlacher, Procedia Chemistry 2009, Seiten 1239 bis 1242, ist bekannt, im Rahmen der Fertigung eines metallurgischen Gefäßes in der feuerfesten Auskleidung Temperaturerfassungselemente vorzusehen, welche ihre Daten leitungslos über Transponder an ein zentrales Erfassungssystem übermitteln.

Die Aufgabe der vorliegenden Erfindung besteht darin, Möglichkeiten zu schaffen, mittels derer die Nachteile des Standes der Technik behoben werden. Insbesondere soll auf einfache Weise die Zuverlässigkeit beim Betrieb der Metallindustrieanlage gesteigert werden können.

Die Aufgabe wird durch ein Verfahren mit den Merkmalen des Anspruchs 1 gelöst. Vorteilhafte Ausgestaltungen des erfindungsgemäßen Verfahrens sind Gegenstand der abhängigen Ansprüche 2 bis 11.

Erfindungsgemäß wird ein Verfahren der eingangs genannten Art dadurch ausgestaltet,
- dass die Prozessdaten unabhängig von der Kommunikation der Lesestation mit dem Transponder erfasst werden,
- dass von der Auswertungseinrichtung anhand der Prozessdaten ermittelt wird, ob das metallurgische Gefäß im Erfassungsbereich der Lesestation erwartet wird oder nicht, und
- dass von der Auswertungseinrichtung eine Meldung ausgegeben wird, wenn eine Kommunikation der Lesestation mit dem Transponder erfolgt und anhand der Prozessdaten ermittelt wird, dass das metallurgische Gefäß nicht im Erfassungsbereich der Lesestation erwartet wird und/oder wenn keine Kommunikation der Lesestation mit dem Transponder erfolgt und anhand der Prozessdaten ermittelt wird, dass das metallurgische Gefäß im Erfassungsbereich der Lesestation erwartet wird.

Die Verfolgung und Überwachung von metallurgischen Gefäßen stützt sich im Stand der Technik lediglich auf die von den Lesestationen empfangenen Daten der Transponder und weist keine Messwertvalidierung auf. Erfindungsgemäß werden hingegen zusätzlich zur Kommunikation mit dem Transponder und unabhängig bzw. losgelöst von der Kommunikation mit dem Transponder Prozessdaten erfasst. Diese Daten werden verwendet, um zu ermitteln, ob im Erfassungsbereich ein metallurgisches Gefäß vorhanden sein sollte oder nicht. Sie werden also dazu verwendet, das Vorliegen oder auch nicht Vorliegen einer Kommunikation zwischen Transponder und Lesestation zu plausibilisieren. Ergibt sich eine Diskrepanz zwischen der anhand der Prozessdaten ermittelten Erwartung und dem tatsächlichen Sachverhalt, ist dies ein Indiz für einen Fehler, der dem Bedienpersonal gemeldet werden kann. Beispielsweise ist es möglich, einen Instandhalter (d.h. eine entsprechende Person
oder Firma) zu informieren. Auch kann eine Anbindung an ein Content-Management-System (Inhaltsverwaltungssystem) erfolgen, beispielsweise zur Speicherung und Dokumentation. Unter dem Begriff "Kommunikation" ist hierbei im Rahmen der vorliegenden Erfindung - selbstverständlich - weniger die Anregung des Transponders zum Aussenden der Transponderdaten durch die Lesestation gemeint, sondern vor allem das Empfangen der Transponderdaten durch die Lesestation.

Selbstverständlich erfolgt nicht sofort das Ausgeben der Meldung, sowie kurzzeitig die Diskrepanz zwischen der anhand der Prozessdaten ermittelten Erwartung und dem tatsächlichen Sachverhalt auftritt. Es wird vielmehr eine Toleranzzeit abgewartet, innerhalb derer die Diskrepanz auch ohne das Ausgeben der Meldung toleriert wird. Wenn jedoch die Diskrepanz auch nach Ablauf der Toleranzzeit weiterbesteht, wird die Meldung ausgegeben. Aufgrund der Toleranzzeit können unvermeidbare Verzögerungszeiten zwischen dem Auftreten einer Kommunikation zwischen Lesestation und Transponder einerseits und der Vermutung des Vorhandenseins des metallurgischen Gefäßes aufgrund der Prozessdaten andererseits mit berücksichtigt werden.

Vorzugsweise erfolgt weiterhin nicht permanent eine derartige Prüfung auf Diskrepanzen bzw. Übereinstimmung. Insbesondere kann eine einmal erfolgte erfolgreiche oder erfolglose Bewertung gültig bleiben, bis beispielsweise eine Prozessphase der jeweiligen Verarbeitungsstation beendet ist und eine andere Prozessphase begonnen wird.

Aufgrund des erfindungsgemäßen Verfahrens kann bei defekten Transpondern beispielsweise das Bedienpersonal automatisch aufgefordert werden, die individuelle Nummer des metallurgischen Gefäßes über eine Mensch-Maschine-Schnittstelle manuell per Hand einzugeben. Die individuelle Nummer ist in der Regel in großen Lettern auf das metallurgische Gefäß aufgedruckt oder aufgemalt. Auch können beispielsweise automatisch Reparaturaufträge generiert werden. Da die Zuverlässigkeit durch dieses gekoppelte Planungssystem steigt, können die Gefäße zukünftig optimal verplant werden.

Die Auswertungseinrichtung kann Bestandteil der Lesestation sein. Alternativ kann die Auswertungseinrichtung an einem anderen Ort angeordnet sein, beispielsweise zentral für mehrere Lesestationen. Im letztgenannten Fall wird eine Kommunikation der Lesestation mit einem in ihrem Erfassungsbereich befindlichen Transponder an die Auswertungseinrichtung gemeldet. Das Ergebnis der Auswertung wird von der Auswertungseinrichtung vorzugsweise über eine Schnittstelle an ein Gateway und/ oder eine Prozessleitstelle weitergeleitet.

In bevorzugter Ausgestaltung ist die Lesestation als ein Funk-Kommunikationsgerät, insbesondere als ein weiterer Transponder, ausgestaltet. Die Lesestation wird weiterhin vorzugsweise von einer Batterie mit elektrischer Energie versorgt. Dadurch kann die Lesestation vollkommen kabellos ausgebildet sein. Wird die Spannungsversorgung als Batterie ausgeführt, kann beispielsweise die Auswertungseinrichtung derart ausgebildet sein, dass sie die Batterie mit überwacht, z.B. hinsichtlich Batterietemperatur, Spannung und Stromstärke. Stellt die Auswertungseinrichtung fest, dass die Batterie einen kritischen Zustand erreicht, kann eine Bedienperson benachrichtigt werden. Es ist auch denkbar, dass die Auswertungseinrichtung in einem derartigen Fall ein verbundenes Condition Monitoring System alarmiert oder in einem Content-Management-System (Inhaltsverwaltungssystem) einen Instandhaltungsauftrag erzeugt. Anderenfalls müssen regelmäßige Batteriewechsel mit eingeplant werden. Ist ein Batteriewechsel nicht erwünscht, kann eine kabelgebundene Spannungsversorgung der Lesestation vorgesehen werden. Alternativ oder zusätzlich zu einer Energieversorgung über eine Batterie ist es möglich, die Lesestation über ein sogenanntes Energy Harvesting mit elektrischer Energie zu versorgen. Energy Harvesting basiert in der Regel auf einer thermoelektrischen Gewinnung elektrischer Energie, beispielsweise mittels eines Peltierelements. Es sind jedoch auch andere Arten der Energiegewinnung aus der Umgebung möglich.

Im einfachsten Fall können die Prozessdaten Eingaben umfassen, die der Auswertungseinrichtung (direkt oder indirekt über ein Prozessautomatisierungssystem) von einer Bedienperson vorgegeben werden. Insbesondere kann es sich bei den Eingaben des Bedieners um Steuerbefehle oder Quittierungen handeln. Steuerbefehle sind Befehle, die einem Automatisierungssystem der mindestens einen Verarbeitungsstation vorgegeben werden und aufgrund derer die mindestens eine Verarbeitungsstation - nicht lediglich das Automatisierungssystem der Verarbeitungsstation - eine Aktion ergreift. Es wird also eine mechanische Aktion eingeleitet und/oder eine elektrische Leistungsaktion ergriffen, nicht lediglich ein Signalfluss initiiert. Quittierungen sind Eingaben, mit denen der Bediener dem Automatisierungssystem der mindestens einen Verarbeitungsstation eine von möglicherweise mehreren Freigaben erteilt. In diesem Fall wird von der mindestens einen Verarbeitungsstation eine Aktion (Definition wie zuvor) ergriffen, wenn alle Freigaben erteilt sind.

Beispielsweise kann der Bediener einem Automatisierungssystem vorgeben, dass bei einem Konverter mit einem Abstich von flüssigem Metall begonnen werden soll. Dies impliziert zwangsweise, dass im Bereich des Konverters eine Pfanne angeordnet ist. Wenn in einem derartigen Fall von der Lesestation kein Transponder erfasst wird, ist dies ein Indiz dafür, dass der Transponder defekt ist oder verloren gegangen ist oder dass die Lesestation defekt ist. Ähnliches gilt beim Abstechen von Schlacke für einen Schlackebehälter. Auch bei anderen Prozessen kann anhand von vom Bediener vorgegebenen Prozessbefehlen auf die Anwesenheit des metallurgischen Gefäßes geschlossen werden. Ein Beispiel eines derartigen Prozessbefehls ist ein Startbefehl für eine sekundärmetallurgische Behandlung einer in einer Pfanne befindlichen Schmelze.

Alternativ oder zusätzlich ist es möglich, dass die Prozessdaten Prozesszustände umfassen, die von einem Automatisierungssystem der mindestens einen Verarbeitungsstation automatisch erfasst und der Auswertungseinrichtung zugeführt werden. Beispielsweise kann die Lesestation an einem Kran oder einem Pfannendrehturm angeordnet sein. Wenn der Kran bzw. Pfannendrehturm eine Pfanne transportiert, kann die Anwesenheit der Pfanne (genauer: deren Masse oder Gewicht) beispielsweise mittels eines Wägesystems erfasst werden. Aus der erfassten Masse bzw. dem erfassten Gewicht kann geschlossen werden, ob die Pfanne vorhanden ist und demzufolge auch der Transponder mit der Lesestation kommunizieren müsste. Wenn trotz vorhandener Pfanne keine Kommunikation des Transponders mit der Lesestation erfolgt, ist dies - wie zuvor - ein Indiz dafür, dass der Transponder defekt ist oder verloren gegangen ist oder dass die Lesestation defekt ist.

Es ist sogar möglich, dass die Prozesszustände zumindest teilweise von der Lesestation oder einer an der Lesestation angeordneten Einrichtung erfasst werden. Insbesondere ist es möglich, dass die Prozesszustände eine Außentemperatur der Lesestation umfassen, die mittels einer an der Lesestation angebrachten Temperaturmesseinrichtung in dem Erfassungsbereich erfasst wird, also in demjenigen Bereich, in dem sich das metallurgische Gefäß befindet, wenn der Transponder mit der Lesestation kommuniziert (bzw. kommunizieren sollte) . In diesem Fall kann beispielsweise ein signifikanter Anstieg der Außentemperatur von der Auswertungseinrichtung dahingehend interpretiert werden, dass sich das metallurgische Gefäß im Erfassungsbereich der Lesestation befinden sollte. Diese Ausgestaltung nutzt den Umstand aus, dass das metallurgische Gefäß eine Temperatur aufweist, die in nennenswertem Umfang über der Umgebungstemperatur liegt, beispielsweise bei über 100 °C, insbesondere bei ca. 200 °C. Die Temperaturmesseinrichtung kann mit der Lesestation über ein Kabel verbunden sein. Alternativ ist beispielsweise der Einsatz eines (bezüglich der Lesestation ortsfesten) Transponders mit eingebautem Temperatursensor möglich, beispielsweise ein SAW- oder passiver RFID-Transponder mit Temperatursensor oder auch ein anderer geeigneter RFID-Transponder.

In vielen Fällen weist die Lesestation eine Antenne auf. Als Außentemperatur der Lesestation wird in diesem Fall vorzugsweise die Temperatur der Antenne oder - falls vorhanden - eines Hitzeschildes der Antenne erfasst. An der Antenne bzw. am Hitzeschild lässt sich der Anstieg der Außentemperatur besonders gut messen, da die Antenne dem Transponder zugewandt ist. Außerdem weisen die Antenne bzw. der Hitzeschild eine kurze Reaktionszeit in Bezug auf einen Temperaturanstieg auf.

Im Falle der Temperaturerfassung wertet vorzugsweise die Auswertungseinrichtung zusätzlich die Außentemperatur als solche aus und gibt eine entsprechende Meldung aus, wenn die Außentemperatur einen Grenzwert übersteigt. Durch diese Vorgehensweise kann beispielsweise ein zunehmender Verschleiß der Pfannenausmauerung erkannt werden. Zu diesem Zweck kann beispielsweise eine Anbindung an ein Condition Monitoring System (CMS, Zustandsüberwachungssystem) erfolgen, welches auf einer regelmäßigen oder permanenten Erfassung des Gefäßzustandes durch Messung und Analyse basiert. Der Grenzwert kann konstant sein. Alternativ kann der Grenzwert zeitabhängig sein. Beispielsweise kann der Grenzwert von der Jahreszeit und/oder der Tageszeit abhängen.

Wenn an der mindestens einen Verarbeitungsstation eine Prozessphase eingeleitet wird, für deren Durchführung die Anwesenheit eines metallurgischen Gefäßes zwingend erforderlich ist, muss das metallurgische Gefäß selbstverständlich auch vorhanden sein. Wenn sowohl aufgrund der Kommunikation der Lesestation mit dem Transponder als auch aufgrund der Auswertung der Prozessdaten die Anwesenheit des zugehörigen metallurgischen Gefäßes erfasst wird, ist dies problemlos. Wenn jedoch die Einleitung einer derartigen Prozessphase gestartet werden soll, obwohl keine Kommunikation der Lesestation mit dem Transponder erfolgt oder aufgrund der Auswertung der Prozessdaten nicht die Anwesenheit des zugehörigen metallurgischen Gefäßes erfasst wird, kann dies kritisch sein.

Beispielsweise ist es möglich, dass ein Transponder verloren gegangen ist (beispielsweise von einem metallurgischen Gefäß abgerissen wurde) und sich nunmehr permanent ohne zugehöriges metallurgisches Gefäß in dem bezüglich der Lesestation ortsfesten Erfassungsbereich der Lesestation befindet. In diesem Fall darf eine Fortsetzung des Betriebs der mindestens einen Verarbeitungsstation erst dann erfolgen, wenn sich tatsächlich ein metallurgisches Gefäß am vorgesehenen Ort der mindestens einen Verarbeitungsstation befindet und dies von einer Bedienperson auch bestätigt wird. Vorzugsweise wird daher in dem Fall, dass eine Kommunikation der Lesestation mit dem Transponder erfolgt und anhand der Prozessdaten ermittelt wird, dass das metallurgische Gefäß nicht im Erfassungsbereich der Lesestation erwartet wird, eine Bestätigung einer Bedienperson abgewartet, bevor eine Fortsetzung des Betriebs der mindestens einen Verarbeitungsstation unter Einbindung des metallurgischen Gefäßes erfolgt.

Umgekehrt ist es möglich, dass sich der Transponder vom metallurgischen Gefäß gelöst hat und sich nun außerhalb des Erfassungsbereichs der Lesestation befindet, obwohl das metallurgische Gefäß sich am vorgesehenen Ort der mindestens einen Verarbeitungsstation befindet. In diesem Fall kann eine Fortsetzung des Betriebs der mindestens einen Verarbeitungsstation unter Einbindung des metallurgischen Gefäßes erfolgen, obwohl keine Kommunikation des Transponders mit der Lesestation erfolgt. Vorzugsweise wird daher in einem derartigen Fall - also in dem Fall, dass keine Kommunikation der Lesestation mit dem Transponder erfolgt und anhand der Prozessdaten ermittelt wird, dass das metallurgische Gefäß im Erfassungsbereich der Lesestation erwartet wird - eine Bestätigung einer Bedienperson abgewartet, bevor eine Fortsetzung des Betriebs der mindestens einen Verarbeitungsstation unter Einbindung des metallurgischen Gefäßes erfolgt.

Es ist möglich, dass die Bestätigung der Bedienperson lediglich eine (binäre) Bestätigung als solche ist. Vorzugsweise umfasst die Bestätigung der Bedienperson jedoch eine Identifikation des metallurgischen Gefäßes. Beispielsweise kann die Bedienperson aufgefordert werden, die Nummer des metallurgischen Gefäßes, die üblicherweise in großen Zeichen in einem von der Bedienperson einsehbaren Bereich des metallurgischen Gefäßes angeordnet ist, einzugeben. Die Identifikation wird in diesem Fall dem metallurgischen Gefäß von der Auswertungseinrichtung zugeordnet, so dass das metallurgische Gefäß aufgrund der nunmehrigen Zuordnung der Identifikation von den anderen Verarbeitungsstationen identifiziert werden kann. Die Identifikation erfolgt in diesem Fall jedoch nicht aufgrund einer Kommunikation zwischen einer dortigen Lesestation und dem Transponder, sondern aufgrund einer Wegverfolgung. Es ist nunmehr jedoch möglich, dass Bediener der anderen Verarbeitungsstationen bereits eine Identifikation des metallurgischen Gefäßes angezeigt bekommen, die sie nur noch bestätigen müssen.

Wie bereits erwähnt, ist es möglich, dass Transponder defekt werden oder verloren gehen. Es ist jedoch ebenso möglich, dass die Lesestation defekt wird. Beispielsweise kann im rauen Betrieb der Metallindustrieanlage eine Antenne der Lesestation, über welche die Lesestation mit dem Transponder kommuniziert, verbogen, abgerissen oder anderweitig beschädigt werden. Wenn die Lesestation defekt wird, ist ebenfalls keine Kommunikation des Transponders mit der Lesestation mehr möglich. In diesem Fall gilt dies jedoch unabhängig davon, welches metallurgische Gefäß sich im Erfassungsbereich der Lesestation befindet. Dieser Sachverhalt kann dazu genutzt werden, zwischen einem Defekt eines einzelnen Transponders und einem Defekt der Lesestation zu unterscheiden. Insbesondere ist es möglich, dass von der Auswertungseinrichtung in dem Fall, dass für mehrere metallurgische Gefäße hintereinander jeweils keine Kommunikation der Lesestation mit dem Transponder erfolgt und anhand der Prozessdaten ermittelt wird, dass das jeweilige metallurgische Gefäß im Erfassungsbereich der Lesestation erwartet wird, eine Meldung ausgegeben wird, dass die Lesestation defekt ist. Die Anzahl an zulässigen Fehlversuchen, ab dem auf einen Defekt der Lesestation geschlossen wird, kann nach Bedarf gewählt sein, beispielsweise bei 2, 3, 4 oder 5.

Die Aufgabe wird weiterhin durch eine Metallindustrieanlage mit den Merkmalen des Anspruchs 12 gelöst. Vorteilhafte Ausgestaltungen der erfindungsgemäßen Metallindustrieanlage sind Gegenstand der abhängigen Ansprüche 13 bis 22.

Erfindungsgemäß wird eine Metallindustrieanlage der eingangs genannten Art dadurch ausgestaltet,
- dass die Prozessdaten unabhängig von der Kommunikation der Lesestation mit dem Transponder erfasst werden,
- dass von der Auswertungseinrichtung anhand der Prozessdaten ermittelt wird, ob das metallurgische Gefäß im Erfassungsbereich der Lesestation erwartet wird oder nicht, und
- dass von der Auswertungseinrichtung eine Meldung ausgegeben wird, wenn eine Kommunikation der Lesestation mit dem Transponder erfolgt und anhand der Prozessdaten ermittelt wird, dass das metallurgische Gefäß nicht im Erfassungsbereich der Lesestation erwartet wird und/oder wenn keine Kommunikation der Lesestation mit dem Transponder erfolgt und anhand der Prozessdaten ermittelt wird, dass das metallurgische Gefäß im Erfassungsbereich der Lesestation erwartet wird.

Die Metallindustrieanlage ist somit insbesondere dazu geeignet und bestimmt, das erfindungsgemäße Verfahren durchzuführen.

Die vorteilhaften Ausgestaltungen der Metallindustrieanlage korrespondieren mit denen des Verfahrens. Es wird daher auf die obigen Ausführungen verwiesen, die in analoger Weise auch für die Metallindustrieanlage anwendbar sind. Bei der Metallindustrieanlage kann es sich um eine metallurgische Industrieanlage handeln, insbesondere um ein Stahlwerk.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Metallindustrieanlage,
- FIG 2: eine Verarbeitungsstation,
- FIG 3: ein Ablaufdiagramm,
- FIG 4: ein Zeit-Temperaturdiagramm und
- FIG 5 bis 8: Ablaufdiagramme.

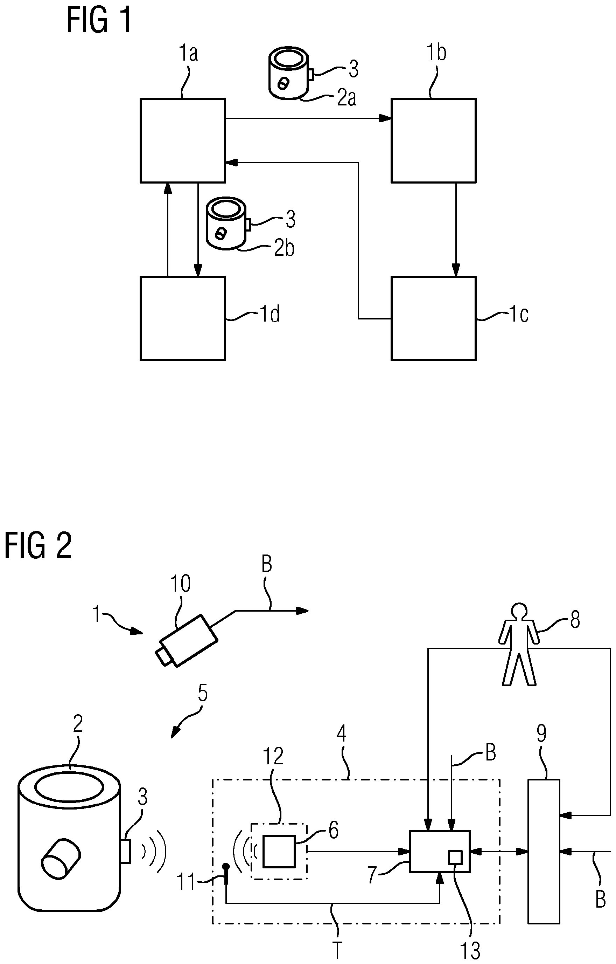

Gemäß FIG 1 umfasst eine Metallindustrieanlage mehrere Verarbeitungsstationen 1 sowie (zumindest in der Regel) mehrere metallurgische Gefäße 2. Die Verarbeitungsstationen 1 werden von den metallurgischen Gefäßen 2 der Metallindustrieanlage angelaufen oder durchlaufen.

Rein beispielhaft sind in FIG 1 als Verarbeitungsstationen 1 ein Lichtbogenofen 1a, eine Vakuumbehandlungsanlage 1b, eine Stranggießanlage 1c und eine Schlackegrube 1d sowie als metallurgische Gefäße 2 eine Gießpfanne 2a und ein Schlackebehälter 2b eingezeichnet. Im Falle dieser Ausgestaltung wird beispielsweise die Gießpfanne 2a beim Abstechen des Lichtbogenofens 1a mit flüssigem Metall gefüllt, beispielsweise mit flüssigem Stahl. Sodann wird die Gießpfanne 2a der Vakuumbehandlungsanlage 1b zugeführt. Dort wird eine sekundärmetallurgische Behandlung der Stahlschmelze durchgeführt. Schließlich wird die Gießpfanne 2a zur Stranggießanlage 2c verfahren. Dort wird die Stahlschmelze zu einem Stahlstrang vergossen. Die leere Gießpfanne 2a wird dann wieder dem Lichtbogenofen 1a zugeführt. Der Schlackebehälter 2b wird beim Abstechen von Schlacke am Lichtbogenofen 1a gefüllt, sodann zur Schlackegrube 1d verfahren, dort gelehrt und schließlich wieder zum Lichtbogenofen 1a zurück verfahren. In der Regel sind mehrere Gießpfannen 2a und mehrere Schlackebehälter 2b vorhanden.

Zur Überwachung der metallurgischen Gefäße 2 in der Metallindustrieanlage werden die metallurgischen Gefäße 2 jeweils mit mindestens einem Transponder 3 ausgerüstet. In dem Transponder 3 sind jeweilige Transponderdaten gespeichert. Vorzugsweise sind die jeweiligen Transponderdaten eindeutig für den jeweiligen Transponder 3. Mittels der Transponderdaten kann daher der jeweilige Transponder 3 und damit auch das jeweilige metallurgische Gefäß 2 nicht nur erfasst, sondern auch identifiziert werden. Der jeweilige Transponder 3 kann unlösbar am jeweiligen metallurgischen Gefäß 2 befestigt sein. Alternativ ist eine lösbare Befestigung am jeweiligen metallurgischen Gefäß 2 möglich.

FIG 2 zeigt eine der Verarbeitungsstationen 1, beispielsweise den Lichtbogenofen 1a. Die nachfolgenden Ausführungen zu FIG 2 können jedoch - alternativ oder zusätzlich - bei anderen der Verarbeitungsstationen 1 gegeben sein. Insbesondere können mehrere oder sogar alle der Verarbeitungsstationen 1 so ausgebildet sein, wie nachfolgend in Verbindung mit FIG 2 und den weiteren FIG erläutert wird.

Gemäß FIG 2 ist an der Verarbeitungsstation 1 eine Lesestation 4 angeordnet. Der Transponder 3 und die Lesestation 4 sind in der Lage, miteinander zu kommunizieren, sofern das zugehörige metallurgische Gefäß 2 sich in einem bezüglich der Lesestation 4 ortsfesten Erfassungsbereich 5 der Lesestation 4 befindet. Insbesondere emittiert die Lesestation 4 - beispielsweise über eine Antenne 6 - permanent oder intermittierend ein Anregungssignal, aufgrund dessen der Transponder 3 zur Emittierung seiner Transponderdaten veranlasst wird. Die von dem Transponder 3 emittierten Transponderdaten werden von der Lesestation 4 empfangen und ausgewertet. Beispielsweise kann die Lesestation 4 aufgrund der empfangenen Transponderdaten feststellen, welches metallurgische Gefäß 2 sich in dem Erfassungsbereich 5 befindet. Die Kommunikation der Lesestation 4 mit dem Transponder 3 umfasst insbesondere zumindest den Empfang der Transponderdaten durch die Lesestation 4.

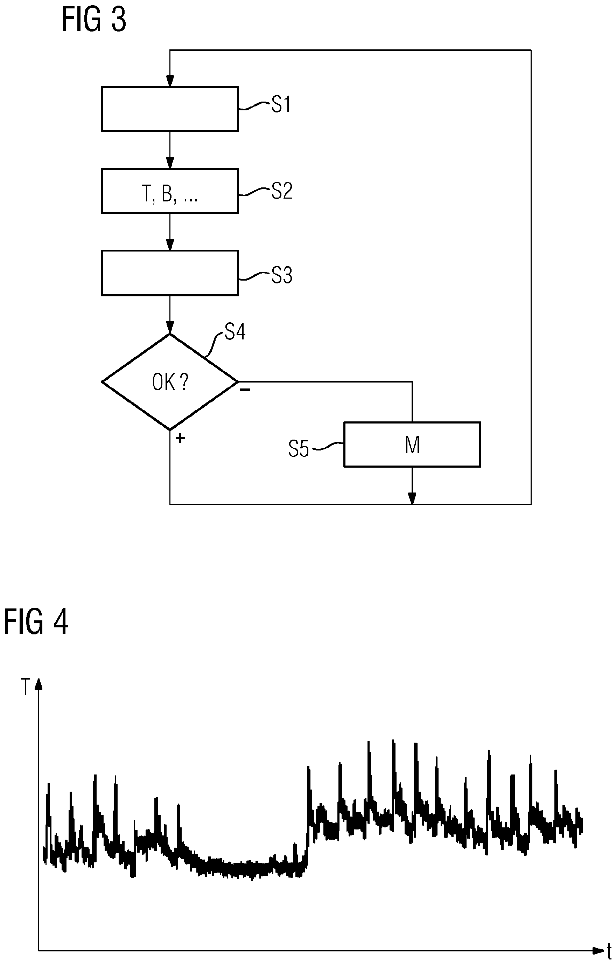

Die Kommunikation der Lesestation 4 mit dem Transponder 3 wird einer Auswertungseinrichtung 7 zugeführt. Es ist möglich, dass der Auswertungseinrichtung 7 lediglich zugeführt wird, dass eine Kommunikation mit einem Transponder 3 erfolgt. In der Regel werden der Auswertungseinrichtung 7 jedoch von der Lesestation 4 Informationen zugeführt, aus denen über die Tatsache der Kommunikation als solche hinaus auch hervorgeht, mit welchem Transponder 3 die Lesestation 4 kommuniziert bzw. welchem metallurgischen Gefäß 2 der Transponder 3 zugeordnet ist, mit dem die Lesestation 4 kommuniziert. Die entsprechenden Informationen werden von der Auswertungseinrichtung 7 gemäß FIG 3 in einem Schritt S1 entgegengenommen.

Der Auswertungseinrichtung 7 werden weiterhin Prozessdaten zugeführt. Bei den Prozessdaten handelt es sich um Daten, die unabhängig von der Kommunikation mit dem Transponder 3 erfasst werden. Beispielsweise können Eingaben erfasst werden, die ein Bediener 8 einem Automatisierungssystem 9 der Verarbeitungsstation 1 vorgibt. Ein Beispiel eines derartigen Eingabe ist eine Anweisung zum Abstechen von Metall oder Schlacke aus dem Lichtbogenofen 1a oder zum Ausgießen eines Schlackebehälters 2b in die Schlackegrube 1d. Falls die Eingaben des Bedieners 8 dem Automatisierungssystem 9 vorgegeben werden, werden die Eingaben des Bedieners 8 vom Automatisierungssystem 9 an die Auswertungseinrichtung 7 weitergeleitet. Alternativ ist eine direkte Eingabe in die Auswertungseinrichtung 7 möglich. Die Prozessdaten nimmt die Auswertungseinrichtung 7 gemäß FIG 3 in einem Schritt S2 entgegen.

In einem Schritt S3 ermittelt die Auswertungseinrichtung 7 anhand der Prozessdaten, ob das metallurgische Gefäß 2 im Erfassungsbereich 5 der Lesestation 4 erwartet wird oder nicht. Beispielsweise kann die Auswertungseinrichtung 7 im Rahmen des Schrittes S3 den Wert einer logischen Variablen ermitteln. In diesem Fall nimmt die logische Variable beispielsweise den Wert WAHR dann und nur dann an, wenn die Auswertungseinrichtung 7 anhand der Prozessdaten zu dem Ergebnis kommt, dass das metallurgische Gefäß 2 im Erfassungsbereich 5 der Lesestation 4 erwartet wird. Anderenfalls nimmt die logische Variable den Wert UNWAHR an.

In einem Schritt S4 prüft die Auswertungseinrichtung 7, ob die im Rahmen des Schrittes S3 ermittelte Erwartungshaltung mit der tatsächlichen Kommunikation des Transponders 3 mit der Lesestation 4 korrespondiert. Korrespondenz liegt vor, wenn eine Kommunikation der Lesestation 4 mit dem Transponder 3 erfolgt und weiterhin anhand der Prozessdaten ermittelt wird, dass das metallurgische Gefäß 2 im Erfassungsbereich 5 der Lesestation 4 erwartet wird. Korrespondenz liegt auch vor, wenn keine Kommunikation der Lesestation 4 mit dem Transponder 3 erfolgt und weiterhin anhand der Prozessdaten ermittelt wird, dass das metallurgische Gefäß 2 nicht im Erfassungsbereich 5 der Lesestation 4 erwartet wird. Liegt Korrespondenz vor, geht die Auswertungseinrichtung 7 zum Schritt S1 zurück. Anderenfalls geht die Auswertungseinrichtung 7 zu einem Schritt S5 über. Im Schritt S5 wird von der Auswertungseinrichtung 7 (zumindest unter anderem) eine Meldung M ausgegeben. Beispielsweise kann die Meldung M an das Automatisierungssystem 9 der Verarbeitungsstationen 1, an ein übergeordnetes Prozessleitsystem oder an den Bediener 8 ausgegeben werden. Auch Kombinationen dieser Maßnahmen sind möglich.

Die obenstehend erläuterte, prinzipielle Vorgehensweise der vorliegenden Erfindung kann auf verschiedene Art und Weise ausgestaltet werden. So ist es beispielsweise - alternativ oder zusätzlich zur Verwertung von Eingaben des Bedieners 8 - möglich, dass die Prozessdaten Prozesszustände umfassen, die von dem Automatisierungssystem 9 automatisch erfasst und der Auswertungseinrichtung 7 zugeführt werden. Beispielsweise kann der Auswertungseinrichtung 7 vom Automatisierungssystem 9 ein Signal zugeführt werden, wenn die Verarbeitungsstation 1 in einen Zustand übergeht, in dem ein metallurgisches Gefäß 2 zwingend benötigt wird. Beispiele derartiger Zustände sind beim Lichtbogenofen 1a der Abstich von flüssigem Metall und Schlacke und bei der Vakuumbehandlungsanlage 1b der Beginn der Behandlung der Metallschmelze. Auch ist es möglich, beispielsweise mittels einer Kamera 10 ein Bild B des Erfassungsbereichs 5 zu erfassen und durch eine automatisierte

Analyse des Bildes B zu ermitteln, ob in dem erfassten Bild B ein metallurgisches Gefäß 2 mit enthalten ist.

In analoger Weise ist es - alternativ oder zusätzlich zur Verwertung von Eingaben des Bedieners 8 und alternativ oder zusätzlich zur Verwertung von vom Automatisierungssystem 9 erfassten Daten - möglich, dass Prozesszustände verwertet werden, die von der Lesestation 4 oder einer an der Lesestation 4 angeordneten Einrichtung erfasst werden. Beispielsweise kann die oben genannte Kamera 10 Bestandteil der Lesestation 4 sein.

Im letztgenannten Fall, also in dem Fall, dass Prozesszustände verwertet werden, die von der Lesestation 4 oder einer an der Lesestation 4 angeordneten Einrichtung erfasst werden, können die Prozesszustände insbesondere eine Außentemperatur T der Lesestation 4 umfassen. Die Außentemperatur T wird in diesem Fall mittels einer an der Lesestation 4 angebrachten Temperaturmesseinrichtung 11 in dem Erfassungsbereich 5 erfasst.

Wenn die Außentemperatur T erfasst wird, bewegt sich die Außentemperatur T gemäß FIG 4 in dem Fall, dass sich kein metallurgisches Gefäß 2 im Erfassungsbereich 5 befindet, in einem relativ niedrigen Bereich. Wenn sich hingegen ein metallurgisches Gefäß 2 im Erfassungsbereich 5 befindet, steigt die Außentemperatur T rasch und signifikant an, siehe die Temperaturspitzen in FIG 4. Es ist daher möglich, dass ein derartiger signifikanter Anstieg der Außentemperatur T von der Auswertungseinrichtung 7 dahingehend interpretiert wird, dass sich das metallurgische Gefäß 2 im Erfassungsbereich 5 der Lesestation 4 befindet.

Prinzipiell kann die Temperaturmesseinrichtung 11 bezüglich der Lesestation 4 an beliebiger Stelle angeordnet sein, solange die Anordnung bezüglich der Lesestation 4 ortsfest ist und weiterhin gewährleistet ist, dass die Temperaturmesseinrichtung 11 von der Wärmestrahlung eines im Erfassungsbereich 5 befindlichen metallurgischen Gefäßes 2 in hinreichendem Umfang beeinflusst wird. Beispielsweise kann als Außentemperatur T der Lesestation 4 die Temperatur der Antenne 6 erfasst werden. Falls die Antenne 6 durch einen Hitzeschild 12 thermisch geschützt wird, kann auch die Temperatur auf der dem Erfassungsbereich 5 zugewandten Seite des Hitzeschildes 12 erfasst werden.

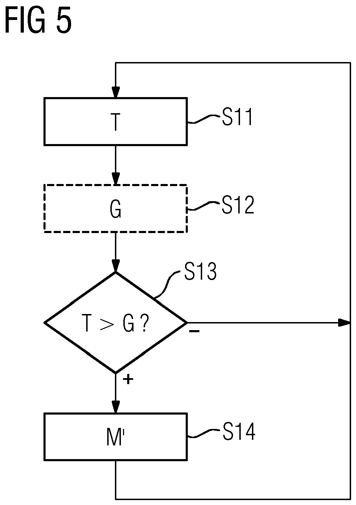

Im Falle der Erfassung der Außentemperatur T ist es ergänzend - also zusätzlich zu Vorgehensweise gemäß FIG 3, gegebenenfalls ergänzt durch die Vorgehensweise gemäß FIG 4 - möglich, dass die Auswertungseinrichtung 7 zusätzlich die Außentemperatur T als solche auswertet. Dies wird nachfolgend in Verbindung mit FIG 5 näher erläutert.

Gemäß FIG 5 nimmt die Auswertungseinrichtung 7 in einem Schritt S11 von der Lesestation 4 die Außentemperatur T entgegen. Der Schritt S11 korrespondiert, falls im Rahmen der Vorgehensweise von FIG 3 ausschließlich die Außentemperatur T als Prozessdatum verwertet wird, mit dem Schritt S2 von FIG 3. Falls im Rahmen der Vorgehensweise von FIG 3 zwar nicht ausschließlich, aber unter anderem die Außentemperatur T als Prozessdatum verwertet wird, ist der Schritt S11 Teil des Schrittes S2 von FIG 3. Anderenfalls ist der Schritt S11 zusätzlich zum Schritt S2 von FIG 3 vorhanden.

In einem Schritt S12 ermittelt die Auswertungseinrichtung 7 einen Grenzwert G. Der Schritt S12 ist nur optional und daher in FIG 5 gestrichelt dargestellt. Falls der Schritt S12 nicht vorhanden ist, weist der Grenzwert G einen vorab definierten, festen Wert auf. Anderenfalls kann der Grenzwert G insbesondere zeitabhängig sein. Beispielsweise kann der Grenzwert G von der Jahreszeit und/oder der Tageszeit abhängen. Auch eine Abhängigkeit von anderen Größen ist möglich.

In einem Schritt S13 prüft die Auswertungseinrichtung 7, ob die Außentemperatur T den Grenzwert übersteigt. Wenn dies nicht der Fall ist, geht die Auswertungseinrichtung 7 zum Schritt S11 zurück. Anderenfalls geht die Auswertungseinrichtung 7 zu einem Schritt S14 über. Im Schritt S14 gibt die Auswertungseinrichtung 7 eine Meldung M' aus. Die Meldung M' kann aufgrund der Vorgehensweise von FIG 5 beispielsweise dafür charakteristisch sein, dass eine Ausmauerung des metallurgischen Gefäßes 2 - beispielsweise einer Gießpfanne - verschlissen ist und erneuert bzw. ausgebessert werden muss.

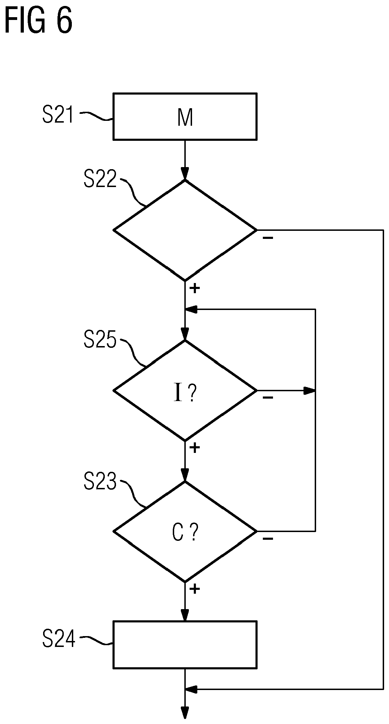

Nachfolgend wird in Verbindung mit FIG 6 eine mögliche Ausgestaltung des Schrittes S5 von FIG 3 näher erläutert. Diese Ausgestaltung kann ohne weiteres mit der Ausgestaltung gemäß FIG 4 und/oder FIG 5 kombiniert werden.

Gemäß FIG 6 wird zunächst in einem Schritt S21 die Meldung M ausgegeben. Das Ausgeben der Meldung M erfolgt im Rahmen des Schrittes S21 zumindest an den Bediener 8. Sodann prüft die Auswertungseinrichtung 7 in einem Schritt S22, ob im Falle der Fortsetzung des Betriebs der Verarbeitungsstation 1 das metallurgische Gefäß 2 zwingend vorhanden sein muss, das metallurgische Gefäß 2 also in den Betrieb der Verarbeitungsstation 1 eingebunden ist. Beispiele derartiger Betriebsweisen sind, wie bereits obenstehend in anderem Zusammenhang erwähnt, der Abstich von flüssigem Metall oder von Schlacke aus dem Lichtbogenofen 1a oder die sekundärmetallurgische Behandlung der Metallschmelze in der Vakuumbehandlungsanlage 1b. Solange die Einbindung des metallurgischen Gefäßes 2 in den Betrieb der Verarbeitungsstation 1 noch nicht zwingend ist, werden nachfolgende Schritte S23 bis S24 übersprungen. Anderenfalls geht die Auswertungseinrichtung 7 zum Schritt S23 über.

Im Schritt S23 wartet die Auswertungseinrichtung 7 eine Eingabe des Bedieners 8 ab. Insbesondere wartet die Auswertungseinrichtung 7 ab, dass ihr vom Bediener 8 eine Bestätigung C dafür vorgegeben wird, dass sich tatsächlich ein metallurgisches Gefäß 2 im Erfassungsbereich 5 befindet. Eine derartige Bestätigung C des Bedieners 8 hat die Wirkung eines Override. Sie hat also Vorrang vor der Diskrepanz zwischen der anhand der Prozessdaten ermittelten Erwartungshaltung für die Anwesenheit eines metallurgischen Gefäßes 2 und der hiermit in Widerspruch stehenden Kommunikation oder Nichtkommunikation des Transponders 3 mit der Lesestation 4. Erst wenn der Auswertungseinrichtung 7 eine derartige Bestätigung C vorgegeben wird, geht die Auswertungseinrichtung zum Schritt S24 über. Im Schritt S24 erfolgt eine Fortsetzung des Betriebs der Verarbeitungsstation 1 unter Einbindung des metallurgischen Gefäßes 2. Beispielsweise kann die Auswertungseinrichtung 7 ein entsprechendes Freigabesignal an das Automatisierungssystem 9 der Verarbeitungsstation 1 übermitteln.

Im Rahmen der obenstehend in Verbindung mit FIG 6 erläuterten Vorgehensweise wird die Bestätigung C des Bedieners 8 sowohl in dem Fall abgewartet, dass eine Kommunikation der Lesestation 4 mit dem Transponder 3 erfolgt und anhand der Prozessdaten ermittelt wird, dass das metallurgische Gefäß 2 nicht im Erfassungsbereich 5 der Lesestation 4 erwartet wird, als auch in dem Fall abgewartet, dass keine Kommunikation der Lesestation 4 mit dem Transponder 3 erfolgt und anhand der Prozessdaten ermittelt wird, dass das metallurgische Gefäß 2 im Erfassungsbereich 5 der Lesestation 4 erwartet wird. Es ist jedoch unter Umständen möglich, die Vorgehensweise von FIG 6 nur für den einen oder den anderen dieser beiden Fälle vorzusehen.

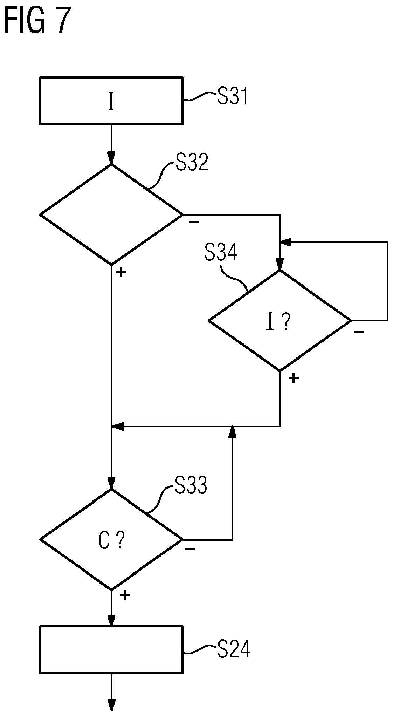

Die Bestätigung C des Bedieners 8 kann nach Bedarf ausgebildet sein. Beispielsweise kann, wie ebenfalls in FIG 6 dargestellt, unmittelbar vor dem Schritt S23 - eventuell sogar unmittelbar vor dem Schritt S22 - in einem Schritt S25 vom Bediener 8 eine Identifikation I des metallurgischen Gefäßes 2 abgefragt werden. In diesem Fall bewirkt die Bestätigung C, dass die Identifikation I dem metallurgischen Gefäß 2 von der Auswertungseinrichtung 7 zugeordnet wird. Beispielsweise kann die Identifikation I an ein Prozessleitsystem der Metallindustrieanlage oder an das Automatisierungssystem 9 der Verarbeitungsstation 1 und von dort aus weiter an das Prozessleitsystem der Metallindustrieanlage übermittelt werden. Dadurch kann insbesondere in dem Fall, dass der Transponder 3 nicht mehr funktioniert, aufgrund der Identifikation I in Verbindung mit einer Wegverfolgung des metallurgischen Gefäßes 2 für andere Verarbeitungsstationen 1 vorab eine Mitteilung erfolgen, um welches metallurgische Gefäß 2 es sich handelt. Das metallurgische Gefäß 2 kann dadurch aufgrund der nunmehrigen Zuordnung der Identifikation I von den anderen Verarbeitungsstationen 1 identifiziert werden. Insbesondere kann - siehe FIG 7 - in diesem Fall die Vorgehensweise gemäß FIG 3 bzw. FIG 6 wie folgt modifiziert werden:

Wenn das metallurgische Gefäß 2 anhand der Transponderdaten nicht identifiziert werden kann und deshalb zum Schritt S5 von FIG 3 bzw. zum Schritt S21 von FIG 6 übergegangen wird, kann die für die jeweilige Verarbeitungsstation 1 zuständige Auswertungseinrichtung 7 zunächst in einem Schritt S31 vom Prozessleitsystem der Metallindustrieanlage die zugehörige Identifikation I anfordern. In einem Schritt S32 prüft die Auswertungseinrichtung 7, ob die Identifikation I vorhanden ist. Wenn dies der Fall ist, geht die Auswertungseinrichtung 7 zu einem Schritt S33 über, in dem ausschließlich noch der Bestätigungsbefehl C vom Bediener 8 abgefragt wird. Anderenfalls wird zunächst zu einem Schritt S34 übergegangen, in dem die Identifikation I vom Bediener 8 abgefragt wird.

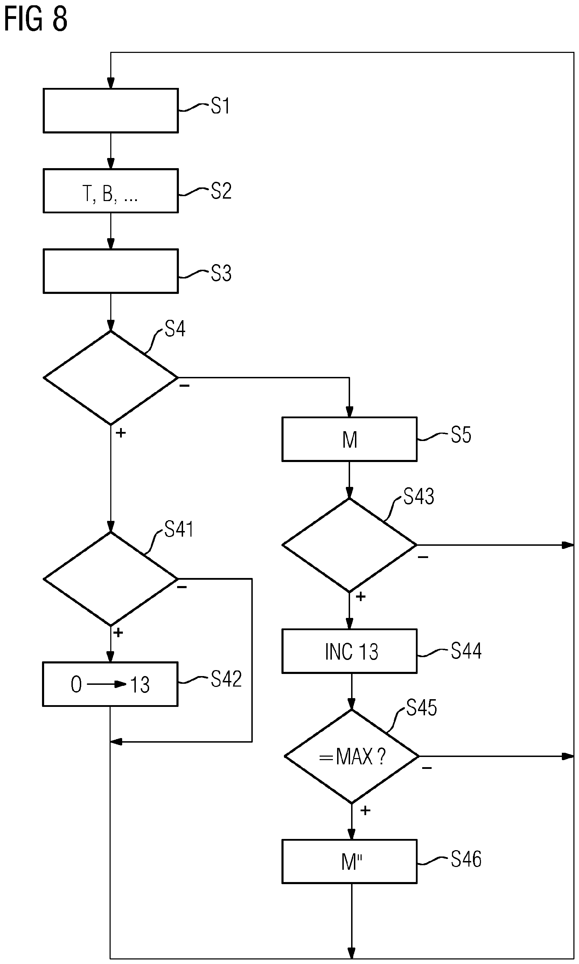

Nachfolgend wird in Verbindung mit FIG 8 eine weitere mögliche Ausgestaltung der Vorgehensweise von FIG 3 näher erläutert. Auch diese Ausgestaltung ist nach Bedarf mit den Ausgestaltungen gemäß FIG 4 bis 7 kombinierbar.

FIG 8 enthält zunächst die Schritte S1 bis S5 von FIG 3. Diese Schritte werden daher nachfolgend nicht näher erläutert.

Zusätzlich sind Schritte S41 und S42 vorhanden. Im Schritt S41 prüft die Auswertungseinrichtung 7, ob eine Kommunikation der Lesestation 4 mit dem Transponder 3 erfolgt und zusätzlich anhand der Prozessdaten ermittelt wird, dass das metallurgische Gefäß 2 im Erfassungsbereich 5 der Lesestation 4 erwartet wird. Wenn dies der Fall ist, bedeutet dies eine ordnungsgemäße Erkennung des metallurgischen Gefäßes 2 durch die Lesestation 4 und zusätzlich eine ordnungsgemäße Erfassung des metallurgischen Gefäßes 2 anhand der Prozessdaten. In diesem Fall kann insbesondere davon ausgegangen werden, dass die Lesestation 4 ordnungsgemäß funktioniert. In diesem Fall führt die Auswertungseinrichtung 7 den Schritt S42 aus, in dem sie einen Zähler 13 (siehe FIG 2) zurücksetzt, also auf den Wert 0 setzt.

Weiterhin sind zusätzlich Schritte S43 bis S46 vorhanden. Im Schritt S43 prüft die Auswertungseinrichtung 7, ob anhand der Prozessdaten ermittelt wird, dass das metallurgische Gefäß 2 im Erfassungsbereich 5 der Lesestation 4 erwartet wird. Aufgrund der Anordnung der Schritte S43 bis S46 im NEIN-Zweig des Schrittes S4 bedeutet dies zwangsweise, dass keine Kommunikation der Lesestation 7 mit dem Transponder 3 erfolgt. Wenn dies der Fall ist, bedeutet dies in der Regel, dass der Transponder 3 und/oder die Lesestation 4 defekt sind. In diesem Fall imkrementiert die Auswertungseinrichtung 7 im Schritt S44 den Zähler 13.

Im Schritt S45 prüft die Auswertungseinrichtung 7, ob der Wert des Zählers 13 einen maximal zulässigen Wert MAX erreicht hat. Der maximal zulässige Wert MAX kann nach Bedarf bestimmt sein. In der Regel wird er im einstelligen Bereich liegen, beispielsweise zwischen 2 und 5. Wenn der maximal zulässige Wert MAX erreicht wird, geht die Auswertungseinrichtung 7 zum Schritt S46 über. Im Schritt S46 gibt die Auswertungseinrichtung 7 eine Meldung M" aus, dass die Lesestation 4 defekt ist.

### Zusammengefasst betrifft die vorliegende Erfindung somit folgenden Sachverhalt:

Eine Metallindustrieanlage umfasst mehrere Verarbeitungsstationen 1, welche von einem metallurgischen Gefäß 2 angelaufen und/oder durchlaufen werden. Zur Überwachung des metallurgischen Gefäßes 2 wird das metallurgische Gefäß 2 mit einem Transponder 3 mit Transponderdaten ausgerüstet. An mindestens einer der Verarbeitungsstationen 1 ist eine Lesestation 4 angeordnet. Der Transponder 3 kommuniziert, sofern das metallurgische Gefäß 2 sich in einem bezüglich der Lesestation 4 ortsfesten Erfassungsbereich 5 der Lesestation 4 befindet, mit der Lesestation 4. Die Kommunikation der Lesestation 4 mit dem Transponder 3 wird einer Auswertungseinrichtung 7 zugeführt. Der Auswertungseinrichtung 7 werden weiterhin Prozessdaten zugeführt, die unabhängig von der Kommunikation der Lesestation 4 mit dem Transponder 3 erfasst werden. Von der Auswertungseinrichtung 7 wird anhand der Prozessdaten ermittelt, ob das metallurgische Gefäß 2 im Erfassungsbereich 5 der Lesestation 4 erwartet wird oder nicht. Von der Auswertungseinrichtung 7 wird eine Meldung M ausgegeben, wenn eine Kommunikation der Lesestation 4 mit dem Transponder 3 erfolgt und anhand der Prozessdaten ermittelt wird, dass das metallurgische Gefäß 2 nicht im Erfassungsbereich 5 der Lesestation 4 erwartet wird und/oder wenn keine Kommunikation der Lesestation 4 mit dem Transponder 3 erfolgt und anhand der Prozessdaten ermittelt wird, dass das metallurgische Gefäß 2 im Erfassungsbereich 5 der Lesestation 4 erwartet wird.

Die vorliegende Erfindung weist viele Vorteile auf. Insbesondere ist auf einfache und zuverlässige Weise eine Plausibilisierung der von der Lesestation 4 erfassten Transponderdaten möglich. Weiterhin wird die Betriebssicherheit der Metallindustrieanlage deutlich gesteigert. Durch die Möglichkeit des Bedieners 8, im Falle von Diskrepanzen durch einen Override die Fortsetzung des Betriebs der jeweiligen Verarbeitungsstation 1 zu bewirken, wird dennoch die Leistungsfähigkeit der Verarbeitungsstation 1 der Metallindustrieanlage insgesamt nicht beeinträchtigt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1, 1a bis 1d: Verarbeitungsstationen
- 2, 2a, 2b: metallurgische Gefäße
- 3: Transponder
- 4: Lesestation
- 5: Erfassungsbereich
- 6: Antenne
- 7: Auswertungseinrichtung
- 8: Bediener
- 9: Automatisierungssystem
- 10: Kamera
- 11: Temperaturmesseinrichtung
- 12: Hitzeschild
- 13: Zähler
- B: Bild
- C: Bestätigung
- G: Grenzwert
- I: Identifikation
- M, M', M": Meldungen
- MAX: maximal zulässiger Wert
- S1 bis S46: Schritte
- T: Außentemperatur

## Patentansprüche

1. Verfahren zur Überwachung eines metallurgischen Gefäßes (2) in einer Metallindustrieanlage, wobei die Metallindustrieanlage mehrere Verarbeitungsstationen (1) umfasst, welche von dem metallurgischen Gefäß (2) angelaufen und/oder durchlaufen werden,
- wobei das metallurgische Gefäß (2) mit einem Transponder (3) mit Transponderdaten ausgerüstet wird,
- wobei an mindestens einer der Verarbeitungsstationen (1) eine Lesestation (4) angeordnet ist,
- wobei der Transponder (3), sofern das metallurgische Gefäß (2) sich in einem bezüglich der Lesestation (4) ortsfesten Erfassungsbereich (5) der Lesestation (4) befindet, mit der Lesestation (4) kommuniziert,
- wobei die Kommunikation der Lesestation (4) mit dem Transponder (3) einer Auswertungseinrichtung (7) zugeführt wird,
- wobei der Auswertungseinrichtung (7) weiterhin Prozessdaten zugeführt werden,
**dadurch gekennzeichnet,**
- **dass** die Prozessdaten unabhängig von der Kommunikation der Lesestation (4) mit dem Transponder (3) erfasst werden,
- **dass** von der Auswertungseinrichtung (7) anhand der Prozessdaten ermittelt wird, ob das metallurgische Gefäß (2) im Erfassungsbereich (5) der Lesestation (4) erwartet wird oder nicht, und
- **dass** von der Auswertungseinrichtung (7) eine Meldung (M) ausgegeben wird, wenn eine Kommunikation der Lesestation (4) mit dem Transponder (3) erfolgt und anhand der Prozessdaten ermittelt wird, dass das metallurgische Gefäß (2) nicht im Erfassungsbereich (5) der Lesestation (4) erwartet wird und/oder wenn keine Kommunikation der Lesestation (4) mit dem Transponder (3) erfolgt und anhand der Prozessdaten ermittelt wird, dass das metallurgische Gefäß (2) im Erfassungsbereich (5) der Lesestation (4) erwartet wird.

2. Verfahren nach Anspruch 1,
**dadurch gekennzeichnet,**
**dass** die Prozessdaten Eingaben umfassen, die der Auswertungseinrichtung (7) von einer Bedienperson (8) vorgegeben werden.

3. Verfahren nach Anspruch 1 oder 2,
**dadurch gekennzeichnet,**
**dass** die Prozessdaten Prozesszustände umfassen, die von einem Automatisierungssystem (9) der mindestens einen Verarbeitungsstation (1) automatisch erfasst und der Auswertungseinrichtung (7) zugeführt werden.

4. Verfahren nach Anspruch 3,
**dadurch gekennzeichnet,**
**dass** die Prozesszustände zumindest teilweise von der Lesestation (4) oder einer an der Lesestation (4) angeordneten Einrichtung (10, 11) erfasst werden.

5. Verfahren nach Anspruch 4,
**dadurch gekennzeichnet,**
**dass** die Prozesszustände eine Außentemperatur (T) der Lesestation (4) umfassen, die mittels einer an der Lesestation (4) angebrachten Temperaturmesseinrichtung (11) in dem Erfassungsbereich (5) erfasst wird, und dass ein signifikanter Anstieg der Außentemperatur (T) von der Auswertungseinrichtung (7) dahingehend interpretiert wird, dass sich das metallurgische Gefäß (2) im Erfassungsbereich (5) der Lesestation (4) befinden sollte.

6. Verfahren nach Anspruch 5,
**dadurch gekennzeichnet,**
**dass** die Lesestation (4) eine Antenne (6) aufweist und dass als Außentemperatur (T) der Lesestation (4) die Temperatur der Antenne (6) oder eines Hitzeschildes (12) der Antenne (6) erfasst wird.

7. Verfahren nach Anspruch 5 oder 6,
**dadurch gekennzeichnet,**
**dass** die Auswertungseinrichtung (7) zusätzlich die Außentemperatur (T) als solche auswertet und eine entsprechende Meldung (M') ausgibt, wenn die Außentemperatur (T) einen Grenzwert (G) übersteigt.

8. Verfahren nach Anspruch 7,
**dadurch gekennzeichnet,**
**dass** der Grenzwert (G) zeitabhängig ist, insbesondere von der Jahreszeit und/oder der Tageszeit abhängt.

9. Verfahren nach einem der obigen Ansprüche,
**dadurch gekennzeichnet,**
**dass** in dem Fall, dass eine Kommunikation der Lesestation (4) mit dem Transponder (3) erfolgt und anhand der Prozessdaten ermittelt wird, dass das metallurgische Gefäß (2) nicht im Erfassungsbereich (5) der Lesestation (4) erwartet wird, und/oder in dem Fall, dass keine Kommunikation der Lesestation (4) mit dem Transponder (3) erfolgt und anhand der Prozessdaten ermittelt wird, dass das metallurgische Gefäß (2) im Erfassungsbereich (5) der Lesestation (4) erwartet wird, eine Bestätigung (C) einer Bedienperson (8) abgewartet wird, bevor eine Fortsetzung des Betriebs der mindestens einen Verarbeitungsstation (1) unter Einbindung des metallurgischen Gefäßes (2) erfolgt.

10. Verfahren nach Anspruch 9,
**dadurch gekennzeichnet,**
**dass** die Bestätigung (C) der Bedienperson (8) eine Identifikation (I) des metallurgischen Gefäßes (2) umfasst und dass die Identifikation (I) dem metallurgischen Gefäß (2) von der Auswertungseinrichtung (7) zugeordnet wird, so dass das metallurgische Gefäß (2) aufgrund der nunmehrigen Zuordnung der Identifikation (I) von den anderen Verarbeitungsstationen (1) identifiziert werden kann.

11. Verfahren nach einem der obigen Ansprüche,
**dadurch gekennzeichnet,**
**dass** von der Auswertungseinrichtung (7) in dem Fall, dass für mehrere metallurgische Gefäße (2) hintereinander jeweils keine Kommunikation der Lesestation (4) mit dem Transponder (3) erfolgt und anhand der Prozessdaten ermittelt wird, dass das jeweilige metallurgische Gefäß (2) im Erfassungsbereich (5) der Lesestation (4) erwartet wird, eine Meldung (M") ausgegeben wird, dass die Lesestation (4) defekt ist.

12. Metallindustrieanlage, wobei die Metallindustrieanlage mehrere Verarbeitungsstationen (1) umfasst, welche von einem metallurgischen Gefäß (2) der Metallindustrieanlage angelaufen und/oder durchlaufen werden,
- wobei das metallurgische Gefäß (2) mit einem Transponder (3) mit Transponderdaten ausgerüstet ist,
- wobei an mindestens einer der Verarbeitungsstationen (1) eine Lesestation (4) angeordnet ist,
- wobei der Transponder (3), sofern das metallurgische Gefäß (2) sich in einem bezüglich der Lesestation (4) ortsfesten Erfassungsbereich (5) der Lesestation (4) befindet, mit der Lesestation (4) kommuniziert,
- wobei die Kommunikation der Lesestation (4) mit dem Transponder (3) einer Auswertungseinrichtung (7) zugeführt wird,
- wobei der Auswertungseinrichtung (7) weiterhin Prozessdaten zugeführt werden,
**dadurch gekennzeichnet,**
- **dass** die Prozessdaten unabhängig von der Kommunikation der Lesestation (4) mit dem Transponder (3) erfasst werden,
- **dass** von der Auswertungseinrichtung (7) anhand der Prozessdaten ermittelt wird, ob das metallurgische Gefäß (2) im Erfassungsbereich (5) der Lesestation (4) erwartet wird oder nicht, und
- **dass** von der Auswertungseinrichtung (7) eine Meldung (M) ausgegeben wird, wenn eine Kommunikation der Lesestation (4) mit dem Transponder (3) erfolgt und anhand der Prozessdaten ermittelt wird, dass das metallurgische Gefäß (2) nicht im Erfassungsbereich (5) der Lesestation (4) erwartet wird und/oder wenn keine Kommunikation der Lesestation (4) mit dem Transponder (3) erfolgt und anhand der Prozessdaten ermittelt wird, dass das metallurgische Gefäß (2) im Erfassungsbereich (5) der Lesestation (4) erwartet wird.

13. Metallindustrieanlage nach Anspruch 12,
**dadurch gekennzeichnet,**
**dass** die Prozessdaten Eingaben umfassen, die der Auswertungseinrichtung (7) von einer Bedienperson (8) vorgegeben werden.

14. Metallindustrieanlage nach Anspruch 12 oder 13,
**dadurch gekennzeichnet,**
**dass** die Prozessdaten Prozesszustände umfassen, die von einem Automatisierungssystem (9) der mindestens einen Verarbeitungsstation (1) automatisch erfasst und der Auswertungseinrichtung (7) zugeführt werden.

15. Metallindustrieanlage nach Anspruch 14,
**dadurch gekennzeichnet,**
**dass** die Prozesszustände zumindest teilweise von der Lesestation (4) oder einer an der Lesestation (4) angeordneten Einrichtung (10, 11) erfasst werden.

16. Metallindustrieanlage nach Anspruch 15,
**dadurch gekennzeichnet,**
**dass** an der Lesestation (4) eine Temperaturmesseinrichtung (11) angebracht ist, mittels derer als Prozesszustände eine Außentemperatur (T) der Lesestation (4) in dem Erfassungsbereich (5) erfasst wird, und dass ein signifikanter Anstieg der Außentemperatur (T) von der Auswertungseinrichtung (7) dahingehend interpretiert wird, dass sich das metallurgische Gefäß (2) im Erfassungsbereich (5) der Lesestation (4) befinden sollte.

17. Metallindustrieanlage nach Anspruch 16,
**dadurch gekennzeichnet,**
**dass** die Lesestation (4) eine Antenne (6) aufweist und dass als Außentemperatur (T) der Lesestation (4) die Temperatur der Antenne (6) oder eines Hitzeschildes (12) der Antenne (6) erfasst wird.

18. Metallindustrieanlage nach Anspruch 16 oder 17,
**dadurch gekennzeichnet,**
**dass** die Auswertungseinrichtung (7) zusätzlich die Außentemperatur (T) als solche auswertet und eine entsprechende Meldung (M') ausgibt, wenn die Außentemperatur (T) einen Grenzwert (G) übersteigt.

19. Metallindustrieanlage nach Anspruch 18,
**dadurch gekennzeichnet,**
**dass** der Grenzwert (G) zeitabhängig ist, insbesondere von der Jahreszeit und/oder der Tageszeit abhängt.

20. Metallindustrieanlage nach einem der Ansprüche 12 bis 19,
**dadurch gekennzeichnet,**
**dass** in dem Fall, dass eine Kommunikation der Lesestation (4) mit dem Transponder (3) erfolgt und anhand der Prozessdaten ermittelt wird, dass das metallurgische Gefäß (2) nicht im Erfassungsbereich (5) der Lesestation (4) erwartet wird, und/oder in dem Fall, dass keine Kommunikation der Lesestation (4) mit dem Transponder (3) erfolgt und anhand der Prozessdaten ermittelt wird, dass das metallurgische Gefäß (2) im Erfassungsbereich (5) der Lesestation (4) erwartet wird, eine Bestätigung (C) einer Bedienperson (8) abgewartet wird, bevor eine Fortsetzung des Betriebs der mindestens einen Verarbeitungsstation (1) unter Einbindung des metallurgischen Gefäßes (2) erfolgt.

21. Metallindustrieanlage nach Anspruch 20,
**dadurch gekennzeichnet,**
**dass** die Bestätigung (C) der Bedienperson (8) eine Identifikation (I) des metallurgischen Gefäßes (2) umfasst und dass die Identifikation (I) dem metallurgischen Gefäß (2) von der Auswertungseinrichtung (7) zugeordnet wird, so dass das metallurgische Gefäß (2) aufgrund der nunmehrigen Zuordnung der Identifikation (I) von den anderen Verarbeitungsstationen (1) identifiziert werden kann.

22. Metallindustrieanlage nach einem der Ansprüche 12 bis 21,
**dadurch gekennzeichnet,**
**dass** von der Auswertungseinrichtung (7) in dem Fall, dass für mehrere metallurgische Gefäße (2) hintereinander jeweils keine Kommunikation der Lesestation (4) mit dem Transponder (3) erfolgt und anhand der Prozessdaten ermittelt wird, dass das jeweilige metallurgische Gefäß (2) im Erfassungsbereich (5) der Lesestation (4) erwartet wird, eine Meldung (M") ausgegeben wird, dass die Lesestation (4) defekt ist.

## Claims

1. Method for monitoring a metallurgical vessel (2) in a metal industry installation, the metal industry installation comprising a number of processing stations (1) which are run to or run through by the metallurgical vessel (2),
- wherein the metallurgical vessel (2) is equipped with a transponder (3) with transponder data,
- wherein a reading station (4) is arranged at at least one of the processing stations (1),
- wherein, if the metallurgical vessel (2) is in a detecting region (5) of the reading station (4) that is stationary in relation to the reading station (4), the transponder (3) communicates with the reading station (4),
- wherein the communication of the reading station (4) with the transponder (3) is fed to an evaluation device (7),
- wherein the evaluation device (7) is also fed process data, **characterized**
- **in that** the process data are detected independently of the communication of the reading station (4) with the transponder (3) ,
- **in that** it is ascertained by the evaluation device (7) on the basis of the process data whether or not the metallurgical vessel (2) is expected in the detecting region (5) of the reading station (4), and
- **in that** a message (M) is issued by the evaluation device (7) if a communication of the reading station (4) with the transponder (3) takes place and it is ascertained on the basis of the process data that the metallurgical vessel (2) is not expected in the detecting region (5) of the reading station (4) and/or if no communication of the reading station (4) with the transponder (3) takes place and it is ascertained on the basis of the process data that the metallurgical vessel (2) is expected in the detecting region (5) of the reading station (4).

2. Method according to Claim 1,
**characterized**
**in that** the process data comprise inputs that are prescribed to the evaluation device (7) by an operator (8).

3. Method according to Claim 1 or 2,
**characterized**
**in that** the process data comprise process states that are automatically detected by an automation system (9) of the at least one processing station (1) and fed to the evaluation device (7).

4. Method according to Claim 3,
**characterized**
**in that** the process states are at least partially detected by the reading station (4) or a device (10, 11) arranged at the reading station (4).

5. Method according to Claim 4,
**characterized**
**in that** the process states comprise an outside temperature (T) of the reading station (4) that is detected in the detecting region (5) by means of a temperature measuring device (11) attached to the reading station (4), and in that a significant rise in the outside temperature (T) is interpreted by the evaluation device (7) as meaning that the metallurgical vessel (2) should be in the detecting region (5) of the reading station (4).

6. Method according to Claim 5,
**characterized**
**in that** the reading station (4) has an antenna (6) and in that the temperature of the antenna (6) or of a heat shield (12) of the antenna (6) is detected as the outside temperature (T) of the reading station (4).

7. Method according to Claim 5 or 6,
**characterized**
**in that** the evaluation device (7) additionally evaluates the outside temperature (T) as such and issues a corresponding message (M') if the outside temperature (T) exceeds a limit value (G).

8. Method according to Claim 7,
**characterized**
**in that** the limit value (G) is time-dependent, in particular depends on the time of year and/or the time of day.

9. Method according to one of the above claims, **characterized**
**in that** in the case where a communication of the reading station (4) with the transponder (3) takes place and it is ascertained on the basis of the process data that the metallurgical vessel (2) is not expected in the detecting region (5) of the reading station (4), and/or in the case where no communication of the reading station (4) with the transponder (3) takes place and it is ascertained on the basis of the process data that the metallurgical vessel (2) is expected in the detecting region (5) of the reading station (4), the device waits for a confirmation (C) from an operator (8) before continuing the operation of the at least one processing station (1) with the inclusion of the metallurgical vessel (2).

10. Method according to Claim 9,
**characterized**
**in that** the confirmation (C) by the operator (8) comprises an identification (I) of the metallurgical vessel (2) and in that the identification (I) is assigned to the metallurgical vessel (2) by the evaluation device (7), so that the metallurgical vessel (2) can be identified by the other processing stations (1) on the basis of the ensuing assignment of the identification (I).

11. Method according to one of the above claims,
**characterized**
**in that** in the case where no communication of the reading station (4) with the transponder (3) takes place for a number of metallurgical vessels (2) in succession and it is ascertained on the basis of the process data that the respective metallurgical vessel (2) is expected in the detecting region (5) of the reading station (4), a message (M") that the reading station (4) is defective is issued by the evaluation device (7).

12. Metal industry installation, the metal industry installation comprising a number of processing stations (1) which are run to or run through by a metallurgical vessel (2),
- wherein the metallurgical vessel (2) is equipped with a transponder (3) with transponder data,
- wherein a reading station (4) is arranged at at least one of the processing stations (1),
- wherein, if the metallurgical vessel (2) is in a detecting region (5) of the reading station (4) that is stationary in relation to the reading station (4), the transponder (3) communicates with the reading station (4),
- wherein the communication of the reading station (4) with the transponder (3) is fed to an evaluation device (7),
- wherein the evaluation device (7) is also fed process data, **characterized**
- **in that** the process data are detected independently of the communication of the reading station (4) with the transponder (3),
- **in that** it is ascertained by the evaluation device (7) on the basis of the process data whether or not the metallurgical vessel (2) is expected in the detecting region (5) of the reading station (4), and
- **in that** a message (M) is issued by the evaluation device (7) if a communication of the reading station (4) with the transponder (3) takes place and it is ascertained on the basis of the process data that the metallurgical vessel (2) is not expected in the detecting region (5) of the reading station (4) and/or if no communication of the reading station (4) with the transponder (3) takes place and it is ascertained on the basis of the process data that the metallurgical vessel (2) is expected in the detecting region (5) of the reading station (4).

13. Metal industry installation according to Claim 12,
**characterized**
**in that** the process data comprise inputs that are prescribed to the evaluation device (7) by an operator (8).

14. Metal industry installation according to Claim 12 or 13,
**characterized**
**in that** the process data comprise process states that are automatically detected by an automation system (9) of the at least one processing station (1) and fed to the evaluation device (7).

15. Metal industry installation according to Claim 14,
**characterized**
**in that** the process states are at least partially detected by the reading station (4) or a device (10, 11) arranged at the reading station (4).

16. Metal industry installation according to Claim 15,
**characterized**
**in that** a temperature measuring device (11) by means of which an outside temperature (T) of the reading station (4) is detected in the detecting region (5) as process states is attached to the reading station (4), and in that a significant rise in the outside temperature (T) is interpreted by the evaluation device (7) as meaning that the metallurgical vessel (2) should be in the detecting region (5) of the reading station (4).

17. Metal industry installation according to Claim 16,
**characterized**
**in that** the reading station (4) has an antenna (6) and in that the temperature of the antenna (6) or of a heat shield (12) of the antenna (6) is detected as the outside temperature (T) of the reading station (4).

18. Metal industry installation according to Claim 16 or 17,
**characterized**
**in that** the evaluation device (7) additionally evaluates the outside temperature (T) as such and issues a corresponding message (M') if the outside temperature (T) exceeds a limit value (G).

19. Metal industry installation according to Claim 18,
**characterized**
**in that** the limit value (G) is time-dependent, in particular depends on the time of year and/or the time of day.

20. Metal industry installation according to one of Claims 12 to 19,
**characterized**
**in that** in the case where a communication of the reading station (4) with the transponder (3) takes place and it is ascertained on the basis of the process data that the metallurgical vessel (2) is not expected in the detecting region (5) of the reading station (4), and/or in the case where no communication of the reading station (4) with the transponder (3) takes place and it is ascertained on the basis of the process data that the metallurgical vessel (2) is expected in the detecting region (5) of the reading station (4), the device waits for a confirmation (C) from an operator (8) before continuing the operation of the at least one processing station (1) with the inclusion of the metallurgical vessel (2).

21. Metal industry installation according to Claim 20,
**characterized**
**in that** the confirmation (C) by the operator (8) comprises an identification (I) of the metallurgical vessel (2) and in that the identification (I) is assigned to the metallurgical vessel (2) by the evaluation device (7), so that the metallurgical vessel (2) can be identified by the other processing stations (1) on the basis of the ensuing assignment of the identification (I).

22. Metal industry installation according to one of Claims 12 to 21,
**characterized**
**in that** in the case where no communication of the reading station (4) with the transponder (3) takes place for a number of metallurgical vessels (2) in succession and it is ascertained on the basis of the process data that the respective metallurgical vessel (2) is expected in the detecting region (5) of the reading station (4), a message (M") that the reading station (4) is defective is issued by the evaluation device (7).

## Revendications

1. Procédé pour la surveillance d'une cuve métallurgique (2) dans une installation d'industrie métallurgique, dans lequel l'installation d'industrie métallurgique comprend plusieurs postes de traitement (1) qui sont desservis et/ou traversés par la cuve métallurgique (2),
- dans lequel la cuve métallurgique (2) est équipée d'un transpondeur (3) comprenant des données de transpondeur ;
- dans lequel, à au moins un des postes de traitement (1), est aménagé au moins un poste de lecture (4) ;
- dans lequel le transpondeur (3), pour autant que la cuve métallurgique (2) se trouve dans une zone d'enregistrement (5) du poste de lecture (4) fixe par rapport au poste de lecture (4), communique avec le poste de lecture (4) ;
- dans lequel la communication du poste de lecture (4) avec le transpondeur (3) est acheminée à un mécanisme d'évaluation (7) ;
- dans lequel des données opératoires sont également acheminées au mécanisme d'évaluation (7) ;
**caractérisé**
- **en ce que** les données opératoires sont enregistrées indépendamment de la communication du poste de lecture (4) avec le transpondeur (3) ;
- **en ce que**, à partir du mécanisme d'évaluation (7), sur base des données opératoires, on détermine le fait de savoir si la cuve métallurgique (2) est attendue ou non dans la zone d'enregistrement (5) du poste de lecture (4) ; et
- **en ce que**, à partir du mécanisme d'évaluation (7), un message (M) est envoyé dans le cas où une communication du poste de lecture (4) a lieu avec le transpondeur (3), et où, sur base des données opératoires, on détermine que la cuve métallurgique (2) n'est pas attendue dans la zone d'enregistrement (5) du poste de lecture (4) et/ou dans le cas où aucune communication du poste de lecture (4) n'a lieu avec le transpondeur (3), et où, sur base des données opératoires, on détermine que la cuve métallurgique (2) est attendue dans la zone d'enregistrement (5) du poste de lecture (4).

2. Procédé selon la revendication 1, **caractérisé en ce que** les données opératoires comprennent des entrées qui ont été spécifiées par un opérateur (8) au mécanisme d'évaluation (7).

3. Procédé selon la revendication 1 ou 2, **caractérisé en ce que** les données opératoires comprennent des états de processus qui sont enregistrés de manière automatique par un système d'automatisation (9) dudit au moins un poste de traitement (1) et qui sont acheminés au mécanisme d'évaluation (7).

4. Procédé selon la revendication 3, **caractérisé en ce que** les états de processus sont enregistrés au moins en partie par le poste de lecture (4) ou par un mécanisme (10, 11) disposé au poste de lecture (4).

5. Procédé selon la revendication 4, **caractérisé en ce que** les états de processus comprennent une température externe (T) du poste de lecture (4), qui est enregistrée dans la zone d'enregistrement (5) au moyen d'un mécanisme de mesure de la température (11) monté au poste de lecture (4), et **en ce qu'**une élévation significative de la température externe (T) est interprétée par le mécanisme d'évaluation (7) dans le sens où la cuve métallurgique (2) devrait se trouver dans la zone d'enregistrement (5) du poste de lecture (4).

6. Procédé selon la revendication 5, **caractérisé en ce que** le poste de lecture (4) présente une antenne (6) et la température de l'antenne (6) ou d'un bouclier thermique (12) de l'antenne (6) est enregistrée au titre de la température externe (T) du poste de lecture (4).

7. Procédé selon la revendication 5 ou 6, **caractérisé en ce que** le mécanisme d'évaluation (7) évalue en outre la température externe (T) comme telle et envoie un message correspondant (M') lorsque la température externe (T) excède une valeur limite (G).

8. Procédé selon la revendication 7, **caractérisé en ce que** la valeur limite (G) est dépendante du temps, en particulier dépend de la période de l'année et/ou du moment de la journée.

9. Procédé selon l'une quelconque des revendications ci-dessus, **caractérisé en ce que**, dans le cas où une communication du poste de lecture (4) a lieu avec le transpondeur (3) et où on détermine, sur base des données opératoires, que la cuve métallurgique (2) n'est pas attendue dans la zone d'enregistrement (5) du poste de lecture (4) et/ou dans le cas où aucune communication du poste de lecture (4) n'a lieu avec le transpondeur (3) et où on détermine, sur base des données opératoires, que la cuve métallurgique (2) est attendue dans la zone d'enregistrement (5) du poste de lecture (4), on attend une confirmation (C) d'un opérateur (8) avant que n'intervienne une poursuite de l'exploitation dudit au moins un poste de traitement (1) impliquant la cuve métallurgique (2).

10. Procédé selon la revendication 9, **caractérisé en ce que** la confirmation (C) de l'opérateur (8) comprend une identification (I) de la cuve métallurgique (2) et **en ce que** l'identification (I) est attribuée à la cuve métallurgique (2) par le mécanisme d'évaluation (7), d'une manière telle que la cuve métallurgique (2) peut être identifiée par les autres postes de traitement (1) sur base de l'attribution désormais en vigueur de l'identification (I).

11. Procédé selon l'une quelconque des revendications ci-dessus, **caractérisé en ce que**, dans le cas où, pour plusieurs cuves métallurgiques (2) l'une derrière l'autre, respectivement aucune communication du poste de lecture (4) n'a lieu avec le transpondeur (3) et où on détermine, sur base des données opératoires, que la cuve métallurgique respective (2) est attendue dans la zone d'enregistrement (5) du poste de lecture (4), un message (M'') est envoyé par le mécanisme d'évaluation (7) concernant le fait que le poste de lecture (4) est défectueux.

12. Installation d'industrie métallurgique, dans lequel l'installation d'industrie métallurgique comprend plusieurs postes de traitement (1) qui sont desservis et/ou traversés par une cuve métallurgique (2) de l'installation d'industrie métallurgique,
- dans laquelle la cuve métallurgique (2) est équipée d'un transpondeur (3) comprenant des données de transpondeur ;
- dans laquelle, à au moins un des postes de traitement (1), est aménagé au moins un poste de lecture (4) ;
- dans laquelle le transpondeur (3), pour autant que la cuve métallurgique (2) se trouve dans une zone d'enregistrement (5) du poste de lecture (4) fixe par rapport au poste de lecture (4), communique avec le poste de lecture (4) ;
- dans laquelle la communication du poste de lecture (4) avec le transpondeur (3) est acheminée à un mécanisme d'évaluation (7) ;
- dans laquelle des données opératoires sont également acheminées au mécanisme d'évaluation (7) ;
**caractérisée**
- **en ce que** les données opératoires sont enregistrées indépendamment de la communication du poste de lecture (4) avec le transpondeur (3) ;
- **en ce que**, à partir du mécanisme d'évaluation (7), sur base des données opératoires, on détermine le fait de savoir si la cuve métallurgique (2) est attendue ou non dans la zone d'enregistrement (5) du poste de lecture (4) ; et
- **en ce que**, à partir du mécanisme d'évaluation (7), un message (M) est envoyé dans le cas où une communication du poste de lecture (4) a lieu avec le transpondeur (3), et où, sur base des données opératoires, on détermine que la cuve métallurgique (2) n'est pas attendue dans la zone d'enregistrement (5) du poste de lecture (4) et/ou dans le cas où aucune communication du poste de lecture (4) n'a lieu avec le transpondeur (3), et où, sur base des données opératoires, on détermine que la cuve métallurgique (2) est attendue dans la zone d'enregistrement (5) du poste de lecture (4).

13. Installation d'industrie métallurgique selon la revendication 12, **caractérisée en ce que** les données opératoires comprennent des entrées qui ont été spécifiées par un opérateur (8) au mécanisme d'évaluation (7).

14. Installation d'industrie métallurgique selon la revendication 12 ou 13, **caractérisée en ce que** les données opératoires comprennent des états de processus qui sont enregistrés de manière automatique par un système d'automatisation (9) dudit au moins un poste de traitement (1) et qui sont acheminés au mécanisme d'évaluation (7).

15. Installation d'industrie métallurgique selon la revendication 14, **caractérisée en ce que** les états de processus sont enregistrés au moins en partie par le poste de lecture (4) ou par un mécanisme (10, 11) disposé au poste de lecture (4).

16. Installation d'industrie métallurgique selon la revendication 15, **caractérisée en ce qu'**au poste de lecture (4) est aménagé un mécanisme (11) de mesure de la température au moyen duquel une température externe (T) du poste de lecture (4), à titre d'états de processus, est enregistrée dans la zone d'enregistrement (5), et **en ce qu'**une élévation significative de la température externe (T) est interprétée par le mécanisme d'évaluation (7) dans le sens où la cuve métallurgique (2) devrait se trouver dans la zone d'enregistrement (5) du poste de lecture (4).

17. Installation d'industrie métallurgique selon la revendication 16, **caractérisée en ce que** le poste de lecture (4) présente une antenne (6) et la température de l'antenne (6) ou d'un bouclier thermique (12) de l'antenne (6) est enregistrée au titre de la température externe (T) du poste de lecture (4).

18. Installation d'industrie métallurgique selon la revendication 16 ou 17, **caractérisée en ce que** le mécanisme d'évaluation (7) évalue en outre la température externe (T) comme telle et envoie un message correspondant (M') lorsque la température externe (T) excède une valeur limite (G).

19. Installation d'industrie métallurgique selon la revendication 18, **caractérisée en ce que** la valeur limite (G) est dépendante du temps, en particulier dépend de la période de l'année et/ou du moment de la journée.

20. Installation d'industrie métallurgique selon l'une quelconque des revendications 12 à 19, **caractérisée en ce que**, dans le cas où une communication du poste de lecture (4) a lieu avec le transpondeur (3) et où on détermine, sur base des données opératoires, que la cuve métallurgique (2) n'est pas attendue dans la zone d'enregistrement (5) du poste de lecture (4) et/ou dans le cas où aucune communication du poste de lecture (4) n'a lieu avec le transpondeur (3) et où on détermine, sur base des données opératoires, que la cuve métallurgique (2) est attendue dans la zone d'enregistrement (5) du poste de lecture (4), on attend une confirmation (C) d'un opérateur (8) avant que n'intervienne une poursuite de l'exploitation dudit au moins un poste de traitement (1) impliquant la cuve métallurgique (2).

21. Installation d'industrie métallurgique selon la revendication 20, **caractérisée en ce que** la confirmation (C) de l'opérateur (8) comprend une identification (I) de la cuve métallurgique (2) et **en ce que** l'identification (I) est attribuée à la cuve métallurgique (2) par le mécanisme d'évaluation (7), d'une manière telle que la cuve métallurgique (2) peut être identifiée par les autres postes de traitement (1) sur base de l'attribution désormais en vigueur de l'identification (I).

22. Installation d'industrie métallurgique selon l'une quelconque des revendications 12 à 21, **caractérisée en ce que**, dans le cas où, pour plusieurs cuves métallurgiques (2) l'une derrière l'autre, respectivement aucune communication du poste de lecture (4) n'a lieu avec le transpondeur (3) et où on détermine, sur base des données opératoires, que la cuve métallurgique respective (2) est attendue dans la zone d'enregistrement (5) du poste de lecture (4), un message (M'') est envoyé par le mécanisme d'évaluation (7) concernant le fait que le poste de lecture (4) est défectueux.
